# EUROPÄISCHE PATENTSCHRIFT

(11) **EP 1 179 459 B1**
(45) Veröffentlichungstag und Bekanntmachung des Hinweises auf die Patenterteilung: **21.12.2005**
(21) Anmeldenummer: 01118934.7
(22) Anmeldetag: 04.08.2001
(51) Int. Cl.: B60R 25/02

(54) **Lenkradschlosseinheiten**
Steering wheel lock
Verrou de direction

(30) Priorität: 10.08.2000 DE 10039839
(43) Veröffentlichungstag der Anmeldung: 13.02.2002
(73) Patentinhaber: Kiekert Aktiengesellschaft, 42579 Heiligenhaus (DE)
(72) Erfinder: Bartels, Markus, 45468 Mülheim (DE); Armbruster, Stefan, 42579 Heiligenhaus (DE)
(74) Vertreter: Nunnenkamp, Jörg

(56) Entgegenhaltungen:
- FR-A- 2 748 710

## Beschreibung

Die Erfindung betrifft eine Lenkradschlosseinheit, mit einer Antriebseinheit für eine drehbare Spindel, ferner mit einer von der Spindel beaufschlagbaren Schlossmutter, und mit einem Verriegelungsbolzen, der ein Lenkrad blockiert.

Bei der zuvor angegebenen Lenkradschlosseinheit entsprechend der FR 2 748 710 A1 besteht das Problem, dass die Reaktionszeit bis zur Entriegelung zumeist zu lang ist. Vergleichbares gilt für aus der Praxis bekannte Lenkradschlosseinheiten.

Unabhängig davon werden im Stand der Technik Stellantriebe beschrieben, wie sie Gegenstand der DE 86 21 592 U1 oder der DE 195 35 437 A1 sind.

Der Erfindung liegt das technische Problem zugrunde, eine Lenkradschlosseinheit der eingangs beschriebenen Gestaltung so weiter zu entwickeln, dass unnötig lange Reaktionszeiten bis zur Entriegelung vermieden werden.

Zur Lösung dieser technischen Problemstellung ist eine gattungsgemäß Lenkradschlosseinheit im Rahmen der Erfindung dadurch gekennzeichnet, dass der Verriegelungsbolzen an eine Rastscheibe angeschlossen ist, dass die ferner die Schlossmutter bei rotierender Spindel die Rastscheibe mitnimmt, wobei die Rastscheibe bei Überführung in die Verriegelungsposition gedreht und nach ihrer Rotation in der eingenommenen Verriegelungsposition fixiert wird, und dass eine Druckfeder vorgesehen ist, welche durch die Rastscheibe beim Übergang von der Entriegelungsstellung zur Verriegelungsstellung komprimiert wird, so dass die Rastscheibe nach ihrer Rotation aus der Verriegelungsposition durch die Federbelastung der Druckfeder in die Entriegelungsstellung gedrückt wird. - Vorteilhafte Ausgestaltungen dieser Lenkradschlosseinheit sind Gegenstand der Patentansprüche 2 bis 6.

Im Folgenden wird die Erfindung anhand einer lediglich ein Ausführungsbeispiel darstellenden Zeichnung näher erläutert;
in der Fig. 1 ist eine perspektivische Ansicht der Lenkradschlosseinheit gezeigt, während
die Fig. 2 den Gegenstand nach Fig. 1 in schematischem Längsschnitt darstellt, und zwar in verriegelungsstellung. In der Fig. 3 ist dagegen die Entriegelungsstellung gezeigt.

In den Figuren erkennt man zunächst einmal eine Spindel 1 mit zugehörigem Antriebszahnrad 2, die von einer Antriebseinheit 9, vorzugsweise einem Elektromotor 9, beaufschlagt wird. Zusätzlich ist ein Führungskäfig 3 realisiert, innerhalb dessen sich eine Schlossmutter 4 getrennt oder zusammen mit einer Rastscheibe 5 translatorisch bewegt, wenn die zugehörige Spindel 1 in Rotationen versetzt wird.

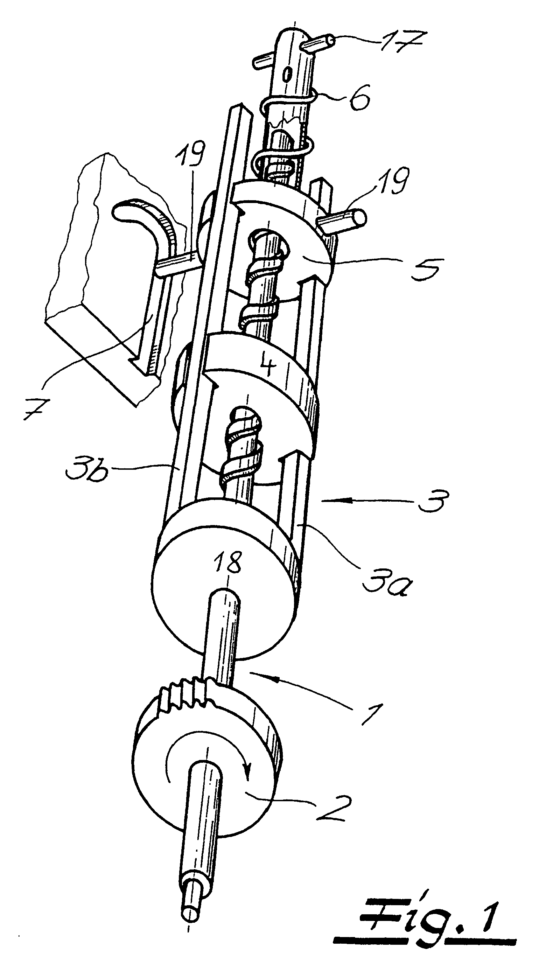

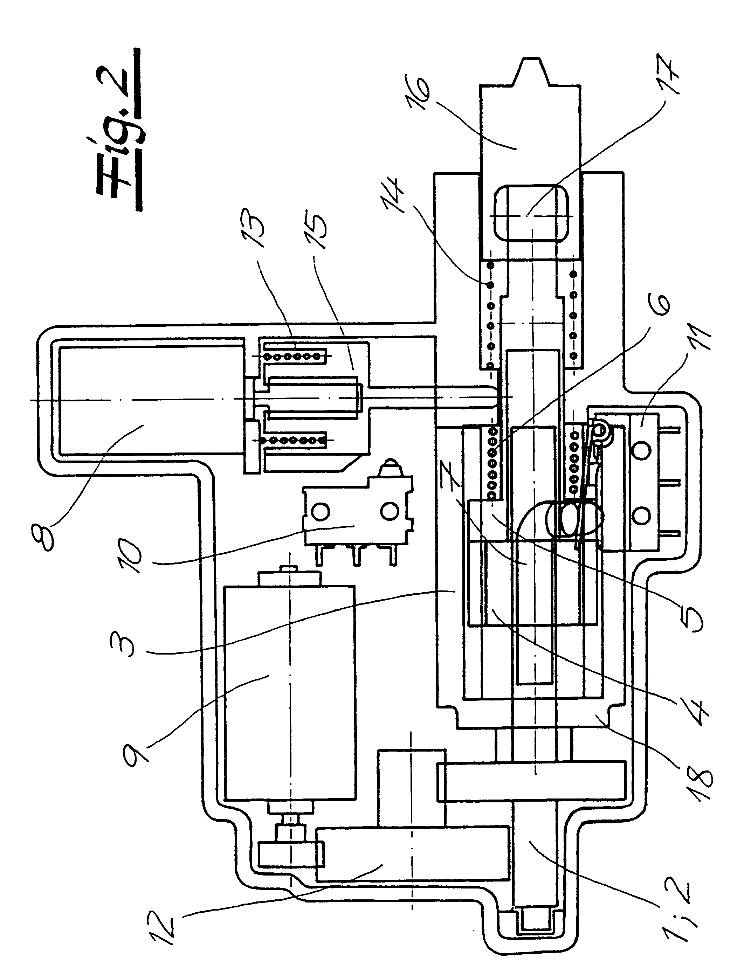

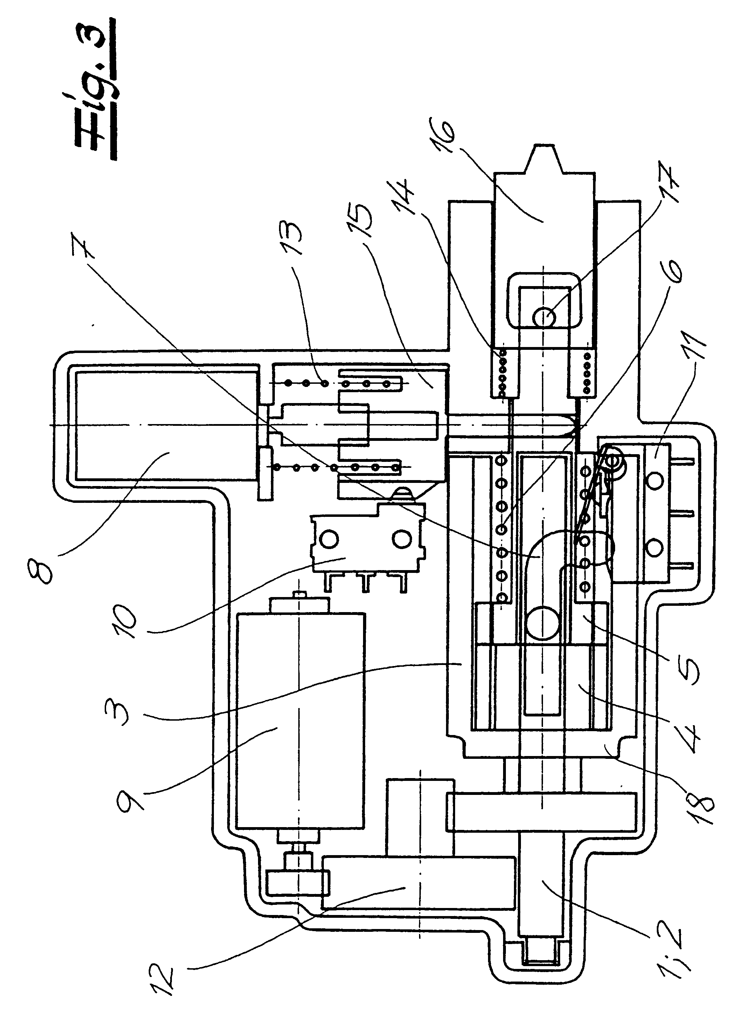

Die Rastscheibe 5 verfügt über bolzenartige Auskragungen 19, die in zugeordneten Führungsschienen 7 für eine zunächst translatorische und dann rotatorische Führung der Rastscheibe 5 (Drehung im Uhrzeigersinn) sorgen. Darüber hinaus ist die Rastscheibe 5 mit einem über das Ende der Spindel 1 hinauskragenden Rohrstück verbunden, wie man dies insbesondere in Fig. 1 erkennt, und welches endseitig einen Verbindungsstift 17 trägt. Dieser Verbindungsstift 17 wirkt mit einer Druckfeder 14 und einem Verriegelungsbolzen 16 zusammen, welcher über den Verbindungsstift 17 an die Spindel 1 angeschlossen ist (vgl. Fig. 2 und 3).

Eine Druckfeder 6 sorgt dafür, dass die Rastscheibe 5 und die regelmäßig, aber nicht immer an ihr anliegende Schlossmutter 4 gegen die translatorische bzw. rotatorische Bewegung vorgespannt sind. Die Funktionsweise ist wie folgt.

Nach dem Aktivieren der Antriebseinheit 9 bzw. des Elektromotors 9 wird die Spindel bzw. Lenkradschlossspindel 1 des Lenkradschlosses über ein mit Federrückwirkung ausgestattetes Getrieberad 12 und das Antriebszahnrad 2 vorzugsweise im Uhrzeigersinn verdreht. Das Getrieberad 12 verfügt in seinem Innern über eine nicht dargestellte (Spiral-)Feder, welche bei dieser Drehung gespannt wird, so dass bei wegfallender Beaufschlagung automatisch ein Rückdrehen der Spindel 1 erfolgt. Das wird auch als "Shuttleprinzip" bezeichnet.

Das Bestromen des Elektromotors 9 lässt sich beispielsweise durch Einbringen eines Zündschlüssels in die Verriegelungsstellung eines zugehörigen Zündschlossschließzylinders oder gar durch Abziehen des Zündschlüssels aus dem Zündschlossschließzylinder auslösen. Ebenso kann dies bei sogenannten keyless entry-Systemen durch Abschalten des Motors mittels eines Betätigungsknopfes, gegebenenfalls unter Zwischenschaltung einer elektronischen Steuereinheit, erfolgen. Jedenfalls muss gewährleistet sein, dass bei gezogenem Zündschlüssel oder in Verriegelungsstellung befindlichem Zündschlüssel und/oder ausgeschaltetem Motor das Lenkradschloss durch Bestromen des Elektromotors 9 aktiviert wird.

Durch die Drehung der Spindel bzw. Lenkradschlossspindel 1 im Uhrzeigersinn wird die in Entriegelungsstellung an der zum Antriebszahnrad 2 hin weisenden Platte 18 des Führungskäfig 3 anliegende Schlossmutter translatorisch in Richtung von dem Antriebszahnrad 2 wegbewegt (vgl. den Übergang von Fig. 3 zu Fig. 2). Für eine einwandfreie Führung der Schlossmutter 4 und der in diesem Fall hieran anliegenden Rastscheibe 5 sorgen jeweilige Streben 3a, 3b des Führungskäfigs 3. Die translatorische Bewegung erfolgt gegen die von der Druckfeder 6 aufgebauten Gegenkräfte, welche demzufolge beim Übergang von der Entriegelungsstellung nach Fig. 3 zur Verriegelungsstellung gemäß Fig. 2 komprimiert wird.

Die Bewegung erfolgt zwangsweise translatorisch innerhalb der in einem in Fig. 1 nicht dargestellten Gehäuse angeordneten Führungsschienen 7 (tatsächlich sind zwei Führungsschienen 7 vorgesehen, in welche jeweils die beidseitigen bolzenartigen Auskragungen 19 an der Rastscheibe 5 eintauchen). Bei weiterem Fortschreiten dieser translatorischen Bewegung fahren die bolzenartigen Auskragungen 19 der Rastscheibe 5 in den abgebogenen Teil der jeweiligen Führungsschienen 7 ein. Das führt dazu, dass der drehbar auf der Spindel 1 gelagerte Führungskäfig 3 über seine zugehörigen Streben 3a, 3b nach dem Ausführungsbeispiel um ca. 30° im Uhrzeigersinn verdreht wird. Gleichzeitig wird die Rastscheibe 5 über die Schlossmutter 4 in der dann eingenommenen Verriegelungsposition gemäß Fig. 2 fest verkeilt.

Dieser Vorgang führt dazu, dass das mit der Rastscheibe 5 verbundene und über das Ende der Spindel 1 hinauskragende Rohrstück und damit der Verriegelungsbolzen 16 über den Verbindungsstift 17 ebenfalls eine rotative Bewegung ausführen, so dass nach Beendigung dieser rotativen Bewegung das hiermit beaufschlagte Lenkrad verriegelt ist.

Nach dem Abschalten bzw. Entstromen des Elektromotors 9 wird die Schlossmutter 4 durch die durch Entspannen der in dem Getriebezahnrad 12 angeordneten Feder rücklaufende Spindel 1 in die Anfangsstellung zurückbewegt. Gleichzeitig liegt die Schlossmutter 4 in dieser Position (wieder) an der dem Antriebszahnrad 2 zugewandten Platte 18 des Führungskäfigs 3 an. Die Rastscheibe 5 und der in dem Gehäuse bzw. Schlossgehäuse verdrehte Führungskäfig 3 verbleiben jedoch trotz dieser Rückführung der Schlossmutter 4 infolge der Rückdrehung der Spindel 1 in der Verriegelungsstellung gemäß Fig. 2, und zwar solange, bis der Entriegelungsvorgang eingeleitet wird.

Dieser Entriegelungsvorgang lässt sich beispielsweise durch Einstecken eines Zündschlüssels in den Schließzylinder des Zündschlosses einleiten und gestaltet sich wie folgt. Nach dem damit verbundenen Bestromen der Antriebseinheit bzw. des Elektromotors 9 wird die Spindel 1 nunmehr im Gegenuhrzeigersinn bewegt (während zuvor für das Verriegeln bekanntermaßen eine Bewegung im Uhrzeigersinn erfolgt ist). Durch diese Bewegung wird der Führungskäfig 3 durch die an der dem Antriebszahnrad 2 zugewandten Platte 18 anliegende Schlossmutter 4 ebenfalls im Gegenuhrzeigersinn bewegt. Das führt dazu, dass die mit diesem über die (Führungs-)Streben 3a, 3b verbundene Rastscheibe 5 aus der Fixierung in den Führungsschienen 7 entfernt wird, in welche sie zuvor durch die beschriebene Uhrzeigersinnbewegung hineingebracht wurde.

Infolge Federbelastung durch die Druckfeder 6 wird die Rastscheibe 5 unmittelbar in Richtung auf die am Führungskäfig 3 bzw. an der dortigen und der Antriebseinheit 2 zugewandten Platte 18 anliegende Schlossmutter 4 gedrückt. Es wird deutlich, dass sich auf diese Weise ein besonders schnelles Entriegeln erzielen lässt, weil die auf der Spindel 1 freigelagerte Rastscheibe 5 sowie die in dem Getriebezahnrad 12 angeordnete Spannfeder dafür sorgen, dass die Entriegelung und die damit verbundene Fixierung der Rastscheibe 5 gleichsam schnell praktisch verzögerungsfrei und zuverlässig aufgehoben werden kann.

Das vorschlagsgemäße Lenkradschloss weist darüber hinaus noch aus Sicherheitsgründen eine redundante Sicherungseinrichtung auf, wobei ein über einen zusätzlichen Elektromotor 8 translatorisch antreibbarer Sicherungsstift das Lenkradschloss durch formschlüssiges Eingreifen des Sicherungsstiftes in die Spindel 1 während des Fahrbetriebes des Fahrzeugs gegen unbeabsichtigtes Einfallen in die Verriegelungsposition sichert. Hierdurch sind Fehlfunktionen ausgeschlossen.

Immer sorgt ein endseitig der dargestellten Lenkradschlosseinheit vorgesehener Verriegelungsbolzen 16 dafür, dass ein mit der Lenkradschlosseinheit ausgerüstetes Lenkrad zuverlässig verriegelt wird. Zu diesem Zweck vollführt der Verriegelungsbolzen 16 im Rahmen der vorliegenden Erfindung zunächst eine translatorische und dann rotatorische Bewegung. Die translatorische Bewegung wird erzeugt durch die Linearbewegung der Schlossmutter 4 bzw. der hiermit zusammenwirkenden Rastscheibe 5. Eine rotative Bewegung des Verriegelungsbolzens 16 im Anschluss an die Translationsbewegung erfolgt dadurch, dass sich nach Einfahren der Rastscheibe 5 in den abgebogenen Teil der Führungsschienen 7 der Führungskäfig 3 um die angegebenen ca. 30° verdreht. In gleicher Weise folgt der Verriegelungsbolzen 16, so dass nach Beendigung dieser rotativen Bewegung das hiermit beaufschlagte Lenkrad verriegelt ist.

Zu erkennen sind neben einem Mikroschalter 10 für den Sperrantrieb auf Basis des zusätzlichen Elektromotors 8 noch ein Mikroschalter 11 für den beschriebenen Rückzugsantrieb, welche die jeweiligen Vorgänge bzw. Funktionsstellungen überwachen. Das Zahnrad 12 ist mit der nicht ausdrücklich dargestellten Rückzugsfeder ausgerüstet. Der zusätzliche Elektromotor 8 ist ferner mit einer Druckfeder 13 für den dort realisierten Sperrantriebsschieber 15 versehen.

Schließlich findet sich eine Druckfeder 14, die mit dem Verriegelungsbolzen 16 zusammenwirkt, welcher über einen Verbindungsstift 17 an die Spindel 1 angeschlossen ist.

## Patentansprüche

1. Lenkradschlosseinheit, mit einer Antriebseinheit (9, 12) für eine drehbare Spindel (1), ferner mit einer von der Spindel (1) beaufschlagbaren Schlossmutter (4), und mit einem Verriegelungsbolzen (16), der ein Lenkrad blockiert,
**dadurch gekennzeichnet, dass**
- der Verriegelungsbolzen (16) an eine Rastscheibe (5) angeschlossen ist, dass ferner
- die Schlossmutter (4) bei rotierender Spindel (1) die Rastscheibe (5) mitnimmt, wobei die Rastscheibe (5) bei Überführung in die Verriegelungsposition gedreht und nach ihrer Rotation in der eingenommenen Verriegelungsposition fixiert wird, und dass
- eine Druckfeder (6) vorgesehen ist, welche durch die Rastscheibe (5) beim Übergang von der Entriegelungsstellung zur Verriegelungsstellung komprimiert wird, so dass die Rastscheibe (5) nach ihrer Rotation aus der Verriegelungsposition durch die Federbelastung der Druckfeder (6) in die Entriegelungsstellung gedrückt wird.

2. Lenkradschlosseinheit nach Anspruch 1, **dadurch gekennzeichnet, dass** die Schlossmutter (4) bei in Verriegelungsposition befindlicher Rastscheibe (5) federunterstützt in ihre Ausgangsstellung unter Rückdrehung der Spindel (1) zurückfährt.

3. Lenkradschlosseinheit nach Anspruch 1 oder 2, **dadurch gekennzeichnet, dass** die Spindel (1) durch eine in einem zugehörigen Getrieberad (12) befindliche Feder zurückgedreht wird, welche bei Überführung in die Verriegelungsposition gespannt wird und sich nach Erreichen der Verriegelungsposition entspannt.

4. Lenkradschlosseinheit nach einem der Ansprüche 1 bis 3, **dadurch gekennzeichnet, dass** die Rastscheibe (5) mit wenigstens einem Verlängerungssteg bzw. einer bolzenartigen Auskragung (19) ausgerüstet ist, welche in wenigstens eine Führungsschiene (7) zur Überführung der Rastscheibe (5) in die Verriegelungsposition einfährt.

5. Lenkradschlosseinheit nach Anspruch 4, **dadurch gekennzeichnet, dass** die Rastscheibe (5) bei Überführung in die Verriegelungsposition gedreht und zur Einnahme der Entriegelungsposition in Gegenrichtung bewegt wird.

6. Lenkradschlosseinheit nach einem der Ansprüche 1 bis 5, **dadurch gekennzeichnet, dass** zusätzlich ein Sperrantrieb mit Sperrantriebschieber (15) vorgesehen ist, welcher die Spindel (1) blockiert.

## Claims

1. A steering wheel locking unit, comprising a drive unit (9, 12) for a rotatable spindle (1), further comprising a clasp nut (4) which can be acted upon by said spindle (1) and comprising a locking bolt (16) which blocks a steering wheel,
**characterised in that**
- said locking bolt (16) is connected to a latching disk (5), that further
- said clasp nut (4) entrains said latching disk (5) when said spindle (1) rotates, wherein said latching disk (5) is turned during transfer into the locking position and after its rotation is fixed in the adopted locking position and that
- a compression spring (6) is provided which is compressed by the latching disk (5) during the transition from the unlocking position to the locking position so that after its rotation from the locking position, said latching disk (5) is pressed by the spring loading of said compression spring (6) into the unlocking position.

2. The steering wheel locking unit according to claim 1, **characterised in that** when said latching disk (5) is located in the locking position, said clasp nut (4) travels back into its initial position as said spindle turns back in a spring-assisted fashion.

3. The steering wheel locking unit according to claim 1 or claim 2, **characterised in that** said spindle (1) is turned back by a spring located in a relevant gear wheel (12) which is tensioned during transfer to the locking position and the tension is released after reaching the locking position.

4. The steering wheel locking unit according to any one of claims 1 to 3, **characterised in that** said latching disk (5) is equipped with at least one extension cross-piece or a bolt-like projection (19) which enters into at least one guide rail (7) for transfer of said latching disk (5) into the locking position.

5. The steering wheel locking unit according to claim 4, **characterised in that** said latching disk (5) is turned during transfer into the locking position and is moved in the opposite direction to adopt the unlocking position.

6. The steering wheel locking unit according to any one of claims 1 to 5, **characterised in that** a blocking drive with blocking drive slider (15) which blocks said spindle (1) is additionally provided.

## Revendications

1. Unité antivol de direction, comprenant une unité d'entraînement (9, 12) pour une broche (1) rotative, également un écrou de serrure (4) pouvant être sollicité par la broche 1, et un boulon de verrouillage (16) qui bloque un volant,
**caractérisée en ce que**
- le boulon de verrouillage (16) est raccordé à un disque d'arrêt (5), **en ce que** également
- l'écrou de serrure (4) entraîne le disque d'arrêt (5) lorsque la broche (1) est en rotation, le disque d'arrêt (5) étant tourné en cas de transfert dans la position de verrouillage et étant fixé après sa rotation dans la position de verrouillage occupée, et **en ce que**
- il est prévu un ressort de pression (6) qui est comprimé par le disque d'arrêt (5) lors du passage de la position de déverrouillage à la position de verrouillage, de sorte que le disque d'arrêt (5) est sorti par compression après sa rotation de la position de verrouillage sous la sollicitation par ressort du ressort de pression (6) pour aller dans la position de déverrouillage.

2. Unité antivol selon la revendication 1, **caractérisée en ce que** l'écrou de serrure (4) recule, assisté par le ressort, dans sa position initiale avec rotation arrière de la broche (1) lorsque le disque d'arrêt (5) se trouve dans la position de verrouillage.

3. Unité antivol de direction selon la revendication 1 ou 2, **caractérisée en ce que** la broche (1) est tournée en marche arrière par un ressort se trouvant dans une roue d'engrenage (12) spécifique, lequel se tend lors du transfert dans la position de verrouillage et se détend après avoir atteint la position de verrouillage.

4. Unité antivol de direction selon l'une quelconque des revendications 1 à 3, **caractérisée en ce que** le disque d'arrêt (5) est équipé d'au moins une nervure de prolongement ou d'une saillie (19) de type boulon, qui s'engage dans au moins un rail de guidage (7) pour le transfert du disque d'arrêt (5) dans la position de verrouillage.

5. Unité antivol de direction selon la revendication 4, **caractérisée en ce que** le disque d'arrêt (5) est tourné lors du transfert dans la position de verrouillage et est déplacé dans le sens contraire pour occuper la position de déverrouillage.

6. Unité antivol de direction selon l'une quelconque des revendications 1 à 5, **caractérisée en ce qu'**il est prévu en supplément une commande de blocage avec coulisseau de commande de blocage (15) qui bloque la broche (1).
